# FASCICULE DE BREVET EUROPEEN

(11) **EP 2 125 282 B1**
(45) Date de publication et mention de la délivrance du brevet: **08.12.2010**
(21) Numéro de dépôt: 08787820.3
(22) Date de dépôt: 19.03.2008
(51) Int. Cl.: B23P 6/00, F01D 5/00, G05B 19/425, G05B 19/4097

(54) **PROCÉDÉ DE RÉPARATION DE PIÈCES USINÉES TELLES QUE DES AUBES DE TURBOMACHINES OU DES PALES DE DAM**
VERFAHREN ZUR REPARATUR VON SPANEND BEARBEITETEN WERKSTÜCKEN WIE TURBOMASCHINENSCHAUFELN ODER BLISKSCHAUFELN
METHOD FOR REPAIRING MACHINED COMPONENTS SUCH AS TURBOMACHINE BLADES OR BLISK BLADES

(30) Priorité: 20.03.2007 FR 0702021
(43) Date de publication de la demande: 02.12.2009
(73) Titulaire: SNECMA, 75015 Paris (FR)
(72) Inventeur: DERRIEN, Gérard, F-78800 Houilles (FR); KERNEIS, Stéphane, F-78000 Versailles (FR); GASNE, Ludovic, F-71530 Sassenay (FR); LEONETTI, Claude, F-91080 Courcouronnes (FR)
(74) Mandataire: Bloch & Bonnétat
(86) Numéro de dépôt international: PCT/FR2008/000367
(87) Numéro de publication internationale: WO 2008/135656

(56) Documents cités:
- EP-A- 1 457 853
- US-A1- 2006 090 336
- JIANMING ZHENG ET AL: "Worn area modeling for automating the repair of turbine blades" THE INTERNATIONAL JOURNAL OF ADVANCED MANUFACTURING TECHNOLOGY, SPRINGER-VERLAG, BE, vol. 29, no. 9-10, 7 juin 2006 (2006-06-07), pages 1062-1067, XP019418863 ISSN: 1433-3015
- GAO ET AL: "Adaptive restoration of complex geometry parts through reverse engineering application" ADVANCES IN ENGINEERING SOFTWARE, ELSEVIER SCIENCE, OXFORD, GB, vol. 37, no. 9, septembre 2006 (2006-09), pages 592-600, XP005572695 ISSN: 0965-9978

## Description

L'invention concerne le domaine de la réparation de pièces usinées telles que des aubes de turbomachines ou des pales de Disque Aubagé Monobloc.

En particulier, l'invention concerne un procédé de réparation par usinage d'une pièce à usiner suivant le préambule de la revendication 1. Un tel procédé est décrit dans le document JIANMING ZHENG ET AL: "Worn area modeling for automating the repair of turbine blades" THE INTERNATIONAL JOURNAL OF ADVANCED MANUFACTURING TECHNOLOGY, SPRINGER-VERLAG, BE, vol. 29, no. 9-10, 7 juin 2006 (2006-06-07), pages 1062-1067, XP019418863 ISSN: 1433-3015.

Un turboréacteur comporte différents rotors, qui tournent autour de son axe. Ces rotors comportent un disque, avec une jante le long de laquelle sont fixées des aubes. Conventionnellement, les aubes sont retenues par leur pied dans un logement prévu à cet effet. Afin de répondre aux exigences accrues en performances des moteurs, ces rotors peuvent maintenant être monoblocs. On parle de disques aubagés monoblocs (DAM). Dans un DAM, les aubes et le disque ne forment qu'une seule pièce. A cet effet, une ébauche forgée est usinée de façon à former le disque, les aubes s'étendant radialement à sa circonférence, le tout étant monobloc. Il est également possible de souder certaines pièces, le DAM résultant étant monobloc. Les avantages des rotors monoblocs sont nombreux, notamment en terme de masse.

Lors de leur utilisation, les aubes subissent des usures (érosion, frottements) mais aussi des impacts de diverses natures se traduisant par de sévères endommagements (déchirures, cornages, fissures, etc.) Le profil des aubes est alors modifié ce qui diminue leurs performances aérodynamiques. Le DAM étant monobloc, il n'est pas possible d'extraire une aube usée pour la remplacer. Il est alors nécessaire de la réparer pour redonner à l'aube un profil aérodynamique adéquat.

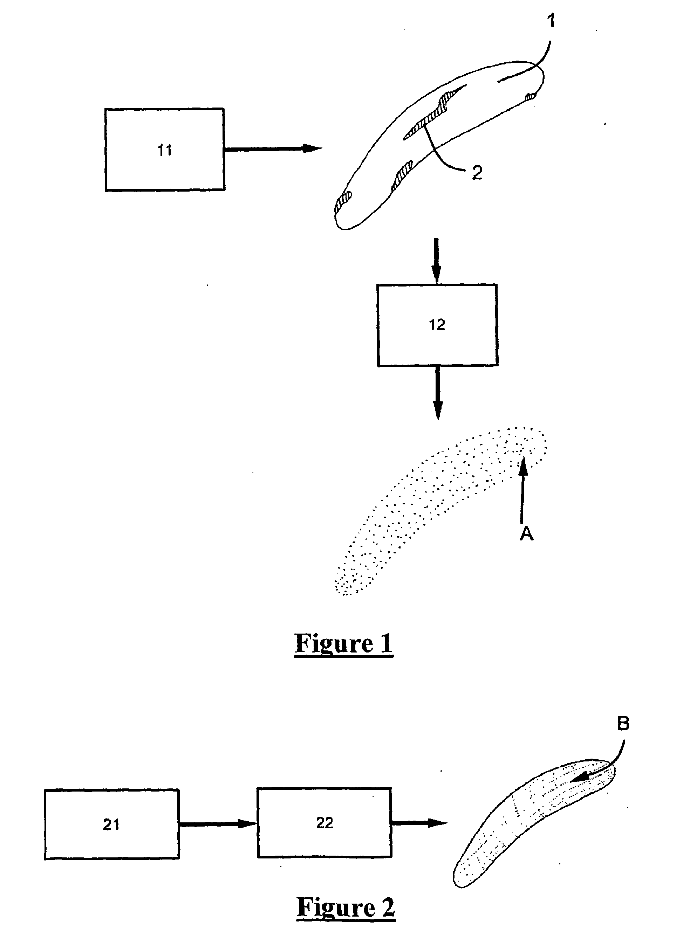

En référence à la figure 1, pour réparer une aube 1 d'un DAM, il est nécessaire de remplacer la partie endommagée par une partie de matière saine ou d'ajouter de la matière pour combler les usures 11. Cet apport de matière est communément désigné par l'homme du métier sous sa dénomination anglaise « patch ». Ce patch 2 est soudé sur la surface de l'aube 1 et celle-ci doit être usinée pour retrouver son profil aérodynamique. L'usinage de la pièce endommagée 1 est une opération délicate qui nécessite un paramétrage spécifique et très précis de la machine d'usinage. En effet, le DAM à réparer présente une géométrie différente de celle d'origine en raison des déformations et des usures apparues durant sa vie. Ce paramétrage est obtenu conventionnellement de manière empirique, il est complexe car il doit redonner à l'aube endommagée sa forme d'origine tout en tenant compte de l'état d'usure moyen du DAM. Il est alors important de comprendre comment la forme d'origine d'une aube est définie pour pouvoir la réparer.

### ◆ Calcul d'un modèle théorique

En référence à la figure 2, un calcul aérodynamique 21, réalisé sur ordinateur, permet de définir un modèle théorique des aubes 22. Ce calcul aérodynamique 21 permet d'obtenir les profils de l'aube à des élévations données (sections d'empilage), appelées sections aérodynamiques. Le Bureau d'Etudes Mécanique (B.E.M) convertit ces sections aérodynamiques en courbes de Bézier et complète un volume filaire prédéfini lors du calcul aérodynamique. A partir de ce volume filaire, le B.E.M construit un volume surfacique en plaquant des carreaux mathématiques de Bézier sur ces courbes de façon à maîtriser au mieux la tangence et la courbure du profil recherché. Cette construction est réalisée à l'aide d'un quelconque logiciel de Conception Assistée par Ordinateur (CAO) capable de traiter des courbes de Bézier.

Cet ensemble de carreaux forme un maillage théorique B. Le maillage B est calculé pour définir de manière précise le volume en trois dimensions (3D) de l'aube. Il est constitué de carreaux qui peuvent être des triangles, des quadrilatères ou autres polygones. Le maillage est plus dense au niveau des zones de l'aube qui présentent une forte courbure. Ce maillage théorique B sert de modèle d'étude pour l'ensemble de l'industrialisation, de l'usinage et pour le contrôle des pièces neuves.

Le maillage théorique B ne peut pas servir de modèle pour la réparation car il n'intègre pas les usures et les déformations qu'a subit la pièce lors de toute sa durée de fonctionnement. Il faut s'appuyer sur un modèle pratique représentant l'état actuel de la pièce.

### ◆ Mesure de la pièce réelle

En référence à la figure 1, on réalise une mesure volumique 12 de la pièce endommagée 1 en mesurant les coordonnées des points sur la surface de la pièce avec des machines de mesures tridimensionnelles (MMT), par palpage ou par mesure sans contact. On obtient ainsi un nuage de points A correspondant à la forme de la pièce endommagée 1, appelé nuage de points au réel A.

### ◆ Usinage de la pièce endommagée

Pour réparer la pièce endommagée, des logiciels de FAO (Fabrication Assistée par Ordinateur) utilisent des fonctions dites de « MORPHING » permettant de déformer le modèle théorique B en modèle pratique adapté à l'usure et à la déformation constatée sur la pièce endommagée 1.

La « **FONCTION RECIPROQUE** » correspond au passage de la pièce endommagée à la pièce à l'état neuf. Cette fonction réciproque est la fonction recherchée qui permet de paramétrer la machine d'usinage (épaisseur à reprendre pour remise à la cote) pour usiner la pièce endommagée 1.

Le but est de trouver la fonction de morphing de déformation du modèle théorique et de déduire la fonction réciproque permettant le paramétrage de la machine d'usinage.

### ◆ Mesure des différences topologiques

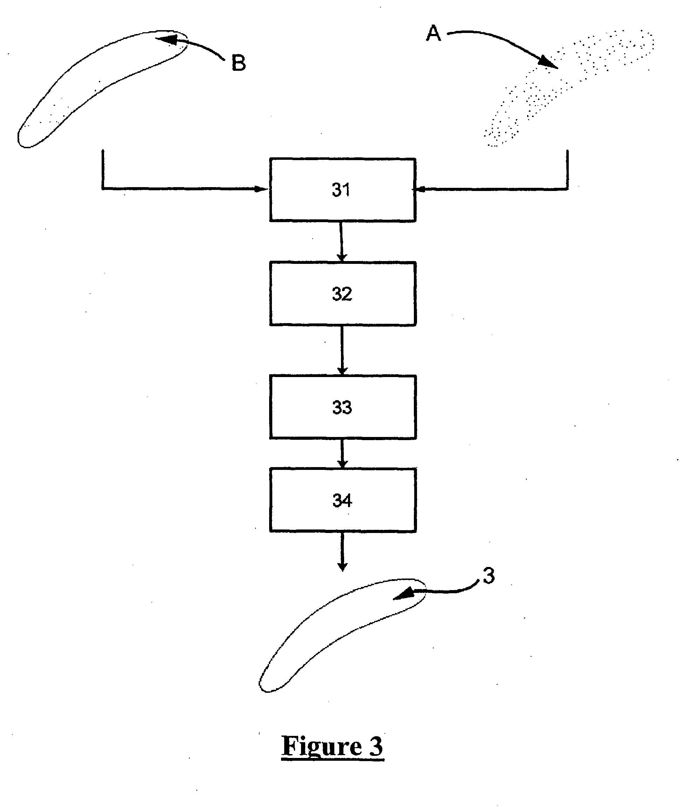

Grâce à la comparaison entre le nuage de points au réel A et le modèle théorique B, en référence à la figure 3, on créée un modèle topologique 31 permettant d'identifier 32 les zones en sous épaisseur et les zones en surépaisseur. On procède ensuite au calcul de la trajectoire d'usinage sur le modèle déformé par morphing 33 et on usine la pièce 34 pour obtenir la pièce réparée 3.

Le modèle topologique 31 comprend un ensemble de points de coordonnées (x,y,z,Δ) avec x, y et z les coordonnées de chaque point du nuage A selon trois axes orthogonaux, Δ étant la projection du point sur la normale du carreau du maillage théorique le plus proche dudit point.

Ainsi si Δ a une valeur positive, la pièce endommagée 1 possède un excès de matière par rapport au modèle théorique B, au contraire si Δ a une valeur négative, la pièce endommagée 1 possède un défaut de matière par rapport au modèle théorique B. Des logiciels de conception assistée par ordinateur (CAO), tels que le logiciel commercialisé sous la marque déposée CATIA permettent d'obtenir des modèles topologiques 31 de manière automatisée et ainsi de visualiser les zones en surépaisseur qui doivent être usinées et les zones qui doivent recevoir un apport de matière.

### ◆ Déformation théorique du maillage par morphing

Pour déformer le modèle théorique B par morphing, il est nécessaire de repérer les meilleurs points à déplacer du modèle théorique B pour interpoler au mieux un maximum de points du nuage de points au réel A. Ces points sont appelés points de contrôle. On peut ainsi déformer le maillage théorique B et obtenir un maillage correspondant à la pièce endommagée 1.

### ◆ Complexité de l'étape de morphing

L'analyse du modèle topologique 32 pour réaliser le morphing est une étape complexe qui nécessite de l'expérience et un haut niveau d'expertise. En effet, la modification locale de la position d'un point de contrôle du maillage théorique B a des influences globales sur la forme et la position des surfaces de Bézier déformées et sur la tangence de raccordement entre les surfaces.

Des conditions de courbure et de tangence doivent également être respectées au niveau des irrégularités de la forme des aubes. Les experts calculent les meilleurs points du modèle théorique B à déplacer afin que les écarts entre le modèle théorique déformé et les points du nuage de points A soient le plus faible possible.

Le procédé de morphing est une étape lente et complexe qui entraîne une variabilité des résultats selon l'expert choisi. Le calcul de la fonction de morphing est donc très délicat. Il n'est donc pas adapté à une application industrielle.

La présente invention vise à pallier au moins ces inconvénients.

L'invention concerne un procédé de réparation par usinage d'une pièce à usiner, telle qu'une aube de turbomachine, à partir d'un profil connu de la pièce, le procédé comprenant les étapes suivantes :
a. une acquisition des coordonnées de points sur une enveloppe de la pièce à usiner, l'ensemble des points formant un nuage de points;
b. une comparaison du profil connu avec le nuage de points pour définir des zones en surépaisseur ou sous épaisseur sur la pièce à usiner;
c. une déformation du profil par un procédé de morphing pour que le profil déformé interpole le nuage de points, la déformation du profil définissant une fonction de morphing et
d. l'usinage de la pièce à usiner par une machine d'usinage, paramétrée à partir de la fonction de morphing

Conformément à l'invention, le procédé est caractérisé par le fait que, la déformation du profil comprend une comparaison de chaque zone en surépaisseur ou sous épaisseur de la pièce à usiner à des configurations élémentaires de déformation (CED) se présentant chacune sous la forme d'une portion de maillage, simulant le profil (B), et de points simulant des points du nuage de points (A), les configurations élémentaires de déformation (CED) étant classées dans une base de données, la base de données associant pour chaque configuration élémentaire de déformation (CED) des paramètres de la fonction de morphing.

Le procédé de l'invention permet avantageusement d'usiner une pièce de manière automatique, les paramètres de la fonction de morphing étant connus dans la base de données.

A partir de cette fonction de morphing, on déduit la fonction de paramétrage de la machine qui va usiner la pièce à réparer. L'automatisation du processus de morphing permet de mettre en place un processus industriel stable et parfaitement répétable de ces opérations sur des pièces dont les écarts et les défauts de forme ne sont pas répétables. D'où les gains de temps, de qualité et donc de coût.

De préférence, le profil de la pièce se présente sous la forme d'un maillage de points.

De préférence encore, les coordonnées et les vecteurs de déplacement des points du maillage à déplacer pour interpoler le nuage de points, dits points de contrôles, sont des paramètres de la fonction de morphing.

De préférence toujours, une machine de mesure tridimensionnelle (MMT), avec ou sans palpage, réalise l'acquisition des coordonnées des points sur l'enveloppe de la pièce à usiner.

De préférence toujours, la pièce à usiner est une pièce ayant reçue un ajout de matière.

L'invention concerne également, la base de données de la mise en oeuvre du procédé de l'invention, associant à une configuration élémentaire de déformation (CED) des paramètres de la fonction de morphing.

L'invention sera mieux comprise à l'aide de la description suivante et du dessin annexé sur lequel :
la figure 1 représente l'étape d'acquisition des coordonnées de points sur une enveloppe de la pièce à usiner selon l'invention;
la figure 2 représente les étapes de création d'un maillage théorique selon l'invention ;
la figure 3 représente les étapes du procédé de l'invention permettant de réparer une pièce endommagée;
la figure 4 représente les étapes permettant de calculer la trajectoire d'usinage sur le modèle théorique, déformé par morphing, selon le procédé de l'invention ;
la figure 5a représente une configuration élémentaire de déformation selon l'invention ;
la figure 5b représente la configuration élémentaire de déformation de la figure 5a après déformation par morphing; et
la figure 6 représente une zone en surépaisseur de la pièce à usiner.

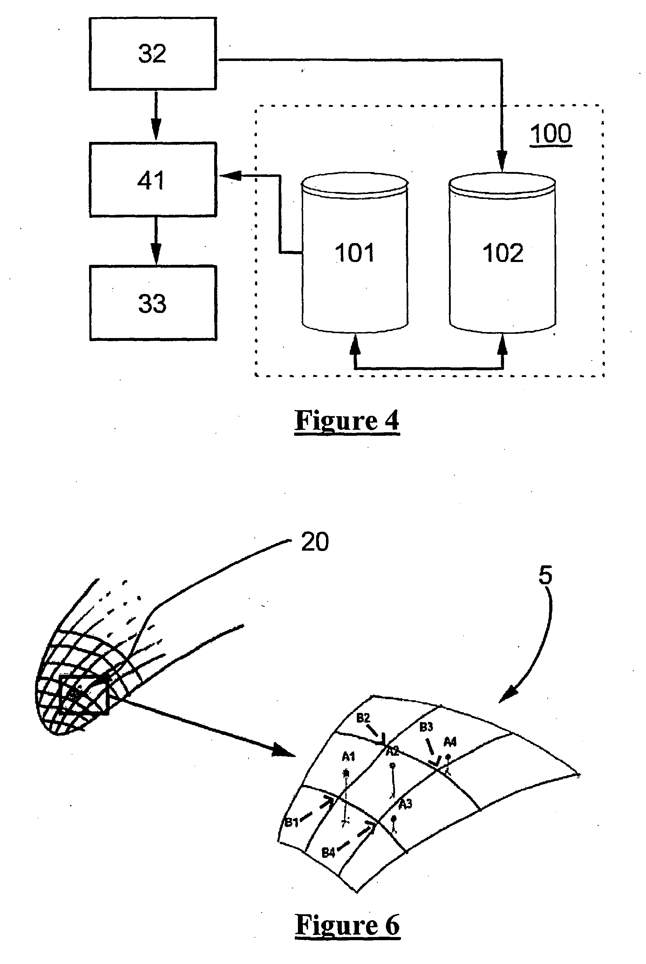

En référence à la figure 4, après une analyse du modèle topologique global 32, les zones en surépaisseur ou en sous épaisseur sont comparées à des configurations élémentaires de déformation (CED) 102 stockées dans une base de données 100 avec des paramètres 101 permettant de déformer par morphing 41 le modèle théorique B afin de calculer la trajectoire d'usinage 33.

### ◆ Configuration élémentaire de déformation (CED)

Une configuration élémentaire de déformation (CED) 102 est une surface paramétrée définie par des courbes de Bézier. Une CED comprend ici une portion de maillage, formée de carreaux pouvant avoir différents motifs, et des points représentant le profil réel de la surface paramétrée. La distance entre les points et les carreaux du maillage représentant les écarts de distances entre le profil théorique et réel de la surface paramétrée.

Une configuration élémentaire de déformation (CED) est une analyse du point de vue local de la fonction de morphing. Une CED comprend une portion de maillage, simulant une portion de maillage du profil théorique de la pièce, et plusieurs points simulant des points de mesure de la pièce réelle. Une configuration élémentaire CED est une représentation des différences qui peuvent exister localement entre une pièce réelle et un profil théorique.

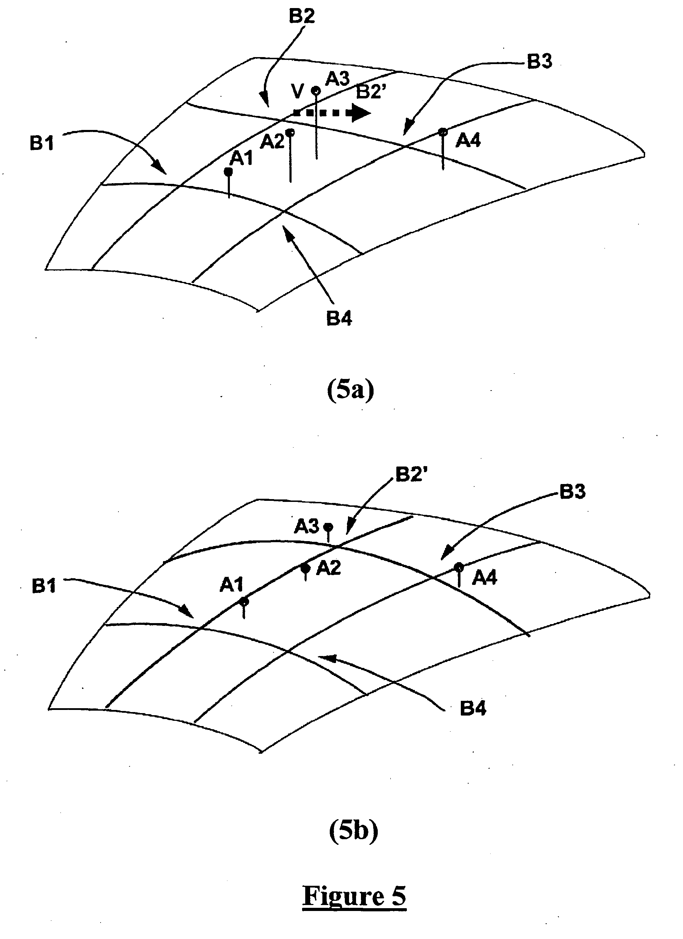

Afin de mieux définir la CED, en référence à la figure 5a, la CED 5 comprend une portion de maillage comportant neufs carreaux, disposés sur trois lignes et trois colonnes, chaque carreau ayant quatre côtés. La CED 5 comprend également quatre points A1, A2, A3, A4.

La distance, séparant respectivement un point de son carreau le plus proche est représenté par une droite s'étendant selon la normale dudit carreau en partant desdits points A1-A4. Ces distances sont similaires à la mesure des écarts Δ définie précédemment pour le modèle topologique. Plus ces distances sont faibles, plus le maillage est proche des points.

Il va de soi qu'une CED, se présentant sous la forme d'une surface paramétrée, qui pour chaque point de la surface associe une valeur représentant un écart de déformation, conviendrait également. Il va de soi qu'une représentation mathématique de la CED aussi bien matricielle qu'analytique conviendrait également.

### ◆ Stockage dans la base de données des paramètres de déformation des CED

Sur la portion de maillage de la CED 5, toujours en référence à la figure 5a, quatre points de contrôles B1-B4 sont représentés. Ils correspondent aux coins du carreau central du maillage. Le déplacement d'un point de contrôle entraîne une modification globale des courbes de Bézier du maillage, affectant aussi bien la longueur des différents côtés des carreaux que leur tangence les uns par rapport aux autres.

La sélection des points de contrôle à déplacer ainsi que leur vecteur de déplacement permettent de déformer le maillage par morphing et d'interpoler au mieux les points A1-A4.

Pour chaque CED de la base de données 100, ces paramètres ont été calculés préalablement par un expert et insérés dans la base de données 100. En référence à la figure 4, la base de données 100 met en relation chaque CED 102 avec ces paramètres 101. A titre d'exemple, la figure 5b représente la déformation par morphing du maillage de la CED de la figure 5a. Le point de contrôle B2 est déplacé selon le vecteur V au point B2', permettant ainsi au maillage d'interpoler les points A1-A4. On remarque, par exemple, que les écarts entre les points A1-A4 et le maillage ont diminué sur la figure 5b. Dans la base de données 100, la CED 5 est associée avec les coordonnées du point B2 à déplacer et son vecteur de déplacement V.

Dans cet exemple, un seul point de contrôle, en l'occurrence B2, est déplacé. Toutefois, plusieurs points de contrôle peuvent être, de manière similaire, déplacés pour interpoler les points A1-A4.

La base de données 100 comprend de nombreux CED 102, ayant des maillages et des positions de points variés, pour lequel la déformation optimale du maillage a été calculée afin d'interpoler au mieux les points. Les CED 102 se distinguent les uns des autres par leur courbure, concavité, nombre de carreaux du maillage, connexité des raccordements et tangence des carreaux.

### ◆ Exemple de mise en oeuvre

Après avoir décrit la structure des moyens de l'invention, son fonctionnement et sa mise en oeuvre vont maintenant être abordés.

En référence à la figure 3, un nuage de points A d'une pièce endommagée 1, ayant reçu éventuellement un ajout de matière 2, est comparé au modèle théorique B afin de créer un modèle topologique global 31 de la pièce 1.

L'analyse du modèle topologique global 32 permet d'identifier des zones topologiques locales correspondant aux zones en sous épaisseur ou en surépaisseur. Après analyse, on réalise une étape de calcul de la trajectoire d'usinage 33 et une étape d'usinage 34 de la pièce 1. En référence à la figure 6, ces zones topologiques locales 20 sont respectivement comparées aux CED 102 de la base de données 100.

Cette comparaison est réalisée par différence de formes, par rapport d'échelle et par analyse en fonction de la position des carreaux du maillage théorique B.

La base de données 100 comprend une grande variété de CED 102 pour permettre d'identifier la zone topologique locale sélectionnée 20, les CED 102 constituant une base au sens mathématique. Lorsque la CED est identifiée, les paramètres 101 associés à la CED 102 sont lus dans la base de données 100, ces paramètres 102 permettant de déformer le maillage B de la zone topologique locale 20.

Cette étape de comparaison est réalisée pour chaque zone topologique locale 20 afin d'obtenir l'ensemble des paramètres 101 locaux nécessaires à la déformation du maillage théorique B. Ces paramètres 101 sont nécessaires au calcul de la trajectoire d'usinage 33 sur le modèle théorique B pour redonner à la pièce endommagée 1 son profil aérodynamique.

Lorsqu'une zone topologique locale 20 ne peut pas être identifiée dans la base de données 100, la déformation du maillage de ladite zone 20 est réalisée par un expert qui détermine les points de contrôle à déplacer ainsi que leur vecteur de déplacement.

La zone topologique locale et les paramètres de déformation de cette zone sont insérés dans la base de données 100, permettant de réutiliser les paramètres calculés par l'expert ultérieurement. L'enrichissement de la base de données 100permet d'éviter à un expert de résoudre plusieurs fois des problèmes similaires. La déformation par morphing est automatisée.
- 1: pièce à usiner
- 2: Ajout de matière (patch)
- 3: Pièce usinée
- 5: Configuration élémentaire de déformation
- 11: Étape d'ajout de matière
- 12: Étape de mesure volumique de la pièce
- 20: Zone topologique locale
- 21: Étape de calcul aérodynamique
- 22: Étape de réalisation du modèle théorique
- 31: Création du modèle topologique
- 32: Analyse du modèle topologique global
- 33: Calcul de la trajectoire d'usinage
- 34: Usinage
- 41: Déformation du modèle théorique par morphing
- 100: Base de données
- 101: Configurations élémentaires de déformation
- 102: Paramètres de la fonction de morphing

## Revendications

1. Procédé de réparation par usinage d'une pièce à usiner (1), telle qu'une aube de turbomachine, à partir d'un profil connu de la pièce (B), le procédé comprenant les étapes suivantes :
a. une acquisition des coordonnées de points sur une enveloppe de la pièce à usiner (1), l'ensemble des points formant un nuage de points (A);
b. une comparaison (31) du profil connu (B) avec le nuage de points (A) pour définir des zones en surépaisseur ou sous épaisseur (20) sur la pièce à usiner (1);
c. une déformation (32) du profil (B) par un procédé de morphing pour que le profil déformé interpole le nuage de points (A), la déformation du profil définissant une fonction de morphing et
d. l'usinage (34) de la pièce à usiner (1) par une machine d'usinage, paramétrée à partir de la fonction de morphing
**caractérisé par le fait que**, la déformation du profil (B) comprend une comparaison de chaque zone en surépaisseur ou sous épaisseur (20) de la pièce à usiner (1) à des configurations élémentaires de déformation (CED) (5) se présentant chacune sous la forme d'une portion de maillage, simulant le profil (B), et de points simulant des points du nuage de points (A), les configurations élémentaires de déformation (CED) (5) étant classées dans une base de données (100), la base de données (100) associant pour chaque configuration élémentaire de déformation (CED) (102) les paramètres de la fonction de morphing (101).

2. Procédé selon la revendication 1, dans lequel le profil de la pièce se présente sous la forme d'un maillage de points (B).

3. Procédé selon la revendication 2, dans lequel les coordonnées et les vecteurs de déplacement des points du maillage (B) à déplacer pour interpoler le nuage de points (A), dits points de contrôles, sont des paramètres de la fonction de morphing (101).

4. Procédé selon l'une des revendications 1 à 3, dans lequel une machine de mesure tridimensionnelle (MMT), avec ou sans palpage, réalise l'acquisition des coordonnées des points sur l'enveloppe de la pièce à usiner.

5. Procédé selon l'une des revendications 1 à 4, dans lequel la pièce à usiner (1) est une pièce (1) ayant reçue un ajout de matière (2).

6. Base de données (100) de la mise en oeuvre du procédé selon l'une des revendications 1 à 5, associant à une configuration élémentaire de déformation (CED) (102) des paramètres de la fonction de morphing (101).

## Claims

1. A method of using machining to repair a component workpiece (1), such as a turbomachine blade, from a known profile of the component (B), the method comprising the following steps:
a. acquiring the coordinates of points on an envelope of the component workpiece (1), the set of points forming a cluster of points (A);
b. comparing (31) the known profile (B) with the cluster of points (A) in order to define zones on the component workpiece (1) that have excess or insufficient thickness (20);
c. deforming (32) the profile (B) using a morphing method so that the deformed profile interpolates the cluster of points (A), the deformation of the profile defining a morphing function, and
d. machining (34) the component workpiece (1) using a machine tool parameterized on the basis of the morphing function,
wherein the deforming of the profile (B) involves comparing each zone of the component workpiece (1) that has excess or insufficient thickness (20) with elementary deformation configurations (EDCs) (5) each in the form of a mesh portion simulating the profile (B), and points simulating points of the cluster of points (A), the elementary deformation configurations (EDCs) (5) being filed in a database (100), the database (100) associating the parameters of the morphing (101) function with each elementary deformation configuration (EDC) (102).

2. The method as claimed in claim 1, in which the profile of the component is in the form of a mesh of points (B).

3. The method as claimed in claim 2, in which the coordinates and the displacement vectors of the points of the mesh (B) that are to be displaced in order to interpolate the cluster of points (A), known as the control points, are parameters of the morphing function (101).

4. The method as claimed in one of claims 1 to 3, in which a three-dimensional measurement machine (3DMM), with or without physical sensing, acquires the coordinates of the points on the envelope of the component workpiece.

5. The method as claimed in one of claims 1 to 4, in which the component workpiece (1) is a component (1) to which material has been added (2).

6. A database (100) for implementing the method as claimed in one of claims 1 to 5, associating parameters of the morphing function (101) with an elementary deformation configuration (EDC) (102).

## Patentansprüche

1. Verfahren zur Reparatur durch Bearbeitung eines Werkstücks (1) wie z.B. einer Turbomaschinenschaufel auf der Grundlage eines bekannten Profils des Stücks (B), wobei das Verfahren die folgenden Schritte umfasst:
a. ein Erfassen der Koordinaten von Punkten auf einer Hülle des Werkstücks (1), wobei die Gesamtheit der Punkte eine Punktwolke (A) bildet;
b. ein Vergleichen (31) des bekannten Profils (B) mit der Punktwolke (A), um die Bereiche mit Überdicke oder Minderdicke (20) auf dem Werkstück (1) zu definieren;
c. ein Verformen (32) des Profils (B) durch ein Morphing-Verfahren, damit das verformte Profil die Punktwolke (A) interpoliert, wobei das Verformen des Profils eine Morphing-Funktion definiert, und
d. das Bearbeiten (34) des Werkstücks (1) durch eine Bearbeitungsmaschine, parametriert auf der Grundlage der Morphing-Funktion,
**dadurch gekennzeichnet, dass** die Verformung des Profils (B) einen Vergleich jedes Bereichs mit Überdicke oder Minderdicke (20) des Werkstücks (1) mit elementaren Verformungskonfigurationen (CED) (5) umfasst, die jeweils die Form eines Maschengitter-Abschnitts aufweisen, der das Profil (B) simuliert, und von Punkten, die Punkte der Punktwolke (A) simulieren, wobei die elementaren Verformungskonfigurationen (CED) (5) in einer Datenbank (100) klassifiziert sind, wobei die Datenbank (100) jeder elementaren Verformungskonfiguration (CED) (102) die Parameter der Morphing-Punktion (101) zuweist.

2. Verfahren nach Anspruch 1, wobei das Profil des Stücks die Form eines Punkt-Maschengitters (B) aufweist.

3. Verfahren nach Anspruch 2, wobei die Verschiebungs-Koordinaten und die -Vektoren der Punkte des Maschengitters (B), die zu verschieben sind, um die Punktwolke (A) zu interpolieren, genannt Kontrollpunkte, Parameter der Morphing-Funktion (101) sind.

4. Verfahren nach einem der Ansprüche 1 bis 3, wobei ein dreidimensionales Messgerät (MMT) mit oder ohne Abtastung die Erfassung der Koordinaten der Punkte auf der Hülle des Werkstücks durchführt.

5. Verfahren nach einem der Ansprüche 1 bis 4, wobei das Werkstück (1) ein Stück (1) ist, das einen Materialzusatz (2) erhalten hat.

6. Datenbank (100) der Durchführung des Verfahrens nach einem der Anspruche 1 bis 5, die einer elementaren Verformungskonfiguration (CED) (102) Parameter der Morphing-Funktion (101) zuweist.
